# EUROPEAN PATENT APPLICATION

(11) **EP 2 418 579 A1**
(43) Date of publication of application: **15.02.2012**
(21) Application number: 10305869.9
(22) Date of filing: 06.08.2010
(51) Int. Cl.: G06F 11/10, H04L 29/08

(54) **A method of storing data, corresponding computer program product, and data storage device therefor**

(71) Applicant: Alcatel Lucent, 75007 Paris (FR)
(72) Inventor: Kranawetter, Christian, 70439 Stuttgart (DE)
(74) Representative: Wetzel, Emmanuelle

(57) **Abstract**

The invention concerns a method of storing data by means of a computer network, the method comprising the steps of segmenting (101) the data into a set of blocks, concatenating (102) at least some of the blocks into a data stream, and transmitting (103) the data stream to a storage server over the computer network. The invention further concerns a computer program product and a device therefor.

## Description

### Field of the Invention

The invention relates to a method of storing data by means of a computer network, the method comprising the steps of segmenting the data into a set of blocks, concatenating at least some of the blocks into a data stream, and transmitting the data stream to a storage server over the computer network. The invention further relates to a computer program product comprising computer-executable instructions for performing said method when the program is run on a computer, and to a device programmed or configured to perform said method.

### Background

In digital electronics, computer data storage, often called storage or memory, refers to computer components, devices, and recording media that retain digital data used for computing for some interval of time. Computer data storage provides one of the core functions of the modern computer, that of information retention. It is one of the fundamental components of all modern computers, and coupled with a central processing unit (CPU), implements the basic computer model used since the 1940s.

By network storage, sometimes called networked storage, is meant a computer data storage connected to a computer network providing data access to network clients. An established network storage architecture is known as a storage area network (SAN), wherein remote computer storage devices such as disk arrays, tape libraries, and optical jukeboxes are attached to the network client in such a way that the devices appear as locally attached to the operating system. In itself, a SAN does not provide a "file" abstraction but only block-level operations.

Network-attached storage (NAS) has gained acceptance as an improved approach to network storage that provides for file-level computer data storage while catering for heterogeneous network clients. A NAS system typically contains one or more hard disks, often arranged into logical, redundant storage containers or redundant arrays of independent disks (RAID). Thus, NAS relieves other servers on the network of the responsibility of file serving. International Publication Number WO 2010/037117 A1. discloses a NAS system which does not require specialized hardware to operate.

A major downside of this known system lies in the insufficient control of the network client over the NAS, resulting in an inadequate level of data security and lack of reliability upon retrieval of the data thus stored.

### Summary

It is an objective of the invention to present an improved approach to network storage that strives to meet the data protection and reliability requirements of enterprise applications.

This objective is achieved by a method of storing data by means of a computer network, the method comprising the steps of segmenting the data into a set of blocks, concatenating at least some of the blocks into a data stream, and transmitting the data stream to a storage server over the computer network. The objective further is achieved by a computer program product comprising computer-executable instructions for performing said method when the program is run on a computer, or by a device programmed or configured to perform said method.

A main idea of the invention is to divide up the data into segments that are suitable for distribution across a computer network.

Further developments of the invention can be gathered from the dependent claims and the following description.

In the following the invention will be explained further making reference to the attached drawing.

To store data according to an embodiment of the invention by means of a computer network, the data is segmented into a set of blocks. Thereupon, some of these blocks are concatenated into a data stream. The resulting data stream is transmitted to a storage server over a computer network.

### Brief Description of the Figures

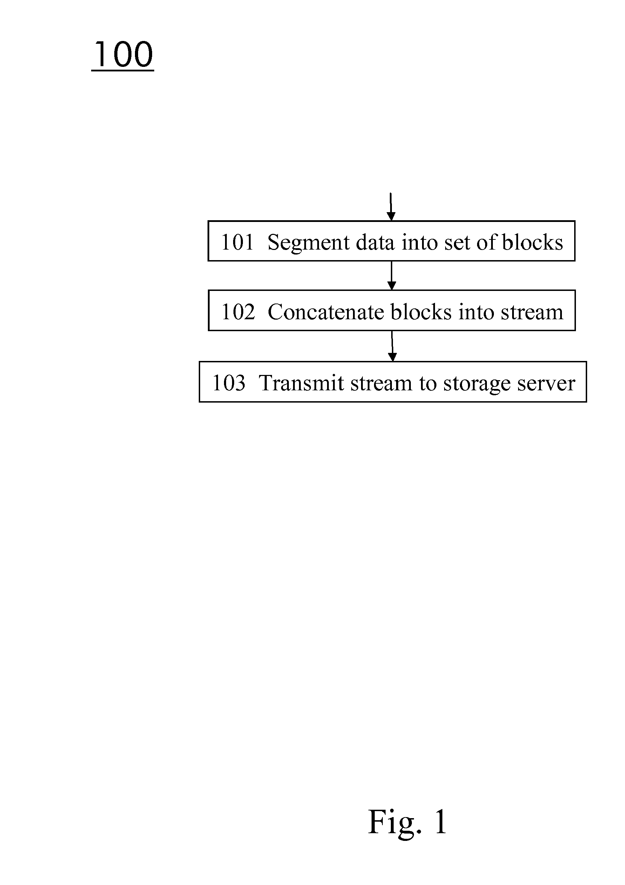

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, and a third processing step 103. A set of arrows represents the flow of control passing through the processing steps 101 to 103. Within this flow, an arrow starting at a first symbol and ending at a second symbol indicates that control passes from the first symbol to the second symbol.

In the embodiment at hand, the method is applied by a network client. In computing, by client is meant an application or system that accesses a remote service on another computer system, known as a server, by way of a computer network. In this context, the term "computer network", often simply referred to as a network, signifies a collection of computers and devices connected by communications channels that facilitates communications among users and allows them to share resources with other users.

In the first processing step 101, the network client segments the data into a set of blocks. In computing, specifically data transmission and data storage, a block is a sequence of bytes or bits, having a nominal length called the block size. Data thus structured are said to be blocked, and the process of putting data into blocks is called blocking. In this embodiment, blocking is used to facilitate the handling and transmission of the data by the network client. For improved efficiency, the network client reads and writes blocked data a whole block at a time.

In an intermediate processing step (not depicted), the network client computes from each block a checksum, that is, a fixed-size datum for the purpose of detecting accidental errors that may be introduced during transmission or storage of the respective block. The integrity of the block can be checked at any later time by re-computing the checksum and comparing it to the original. If the checksums thus derived do not match, the block was almost certainly altered either intentionally or unintentionally.

The procedure that yields the checksum from the block is called a checksum function or checksum algorithm. A preferred checksum algorithm will yield a different result with high probability when the data is accidentally corrupted; if the checksums match, the data thus is very likely to be free of errors. To minimize the storage capacity required for maintaining the checksum, the network client employs a checksum algorithm based on a hash function, that is, any well-defined procedure or mathematical function that converts the block into a small datum, usually a single integer. Accordingly, in this scenario, the checksum is also called a hash value, hash code, hash sum, or simply hash.

In the embodiment at hand, the hash function used may take the form of, inter alia, a cyclic redundancy check (CRC); a longitudinal redundancy check (LRC); a Fletcher's checksum such as Fletcher-4, Fletcher-8, Fletcher-16, or Fletcher-32; an Adler-32 algorithm; a Luhn algorithm, also known as a Luhn formula, "modulus 10", or "mod 10" algorithm, as described in U.S. Patent No. 2,950,048 and specified in ISO/IEC 7812-1; a Verhoeff algorithm; a message-digest algorithm such as MD2, MD4, or MD5; or a secure hash algorithm such as SKA-0, SHA-1, SHA-2, or the upcoming SHA-3.

Since both the message-digest and secure hash algorithms are based on cryptographic hash functions, their use in the computation of the checksum bears the additional advantage of allowing the network client to verify integrity of the respective block upon retrieval, thus protecting against accidental as well as intentional change of the data contained therein. In information security, a hash function is called cryptographic if it is easy to compute the hash value for any given block, it is infeasible to find a block that has a given hash, it is infeasible to modify a block without changing its hash, and it is infeasible to find two different blocks with the same hash. If a cryptographic hash function is employed, the block is commonly referred to as a message, and the resulting hash value is called a cryptographic hash value, message digest, or simply digest.

In the second processing step 102, the network client concatenates at least some of the blocks of the first processing step 101 into a data stream. In telecommunications and computing, a data stream is any sequence of digitally encoded coherent signals used to transmit or receive information that is in transmission. To this end, in order to allow for a distributed storage across the computer network, the set of blocks is partitioned into a plurality of subsets, the blocks of each subset being concatenated into a separate data stream. In accordance with the term's implication in combinatorics and set theory, by partitioning is meant the division of the set into nonoverlapping and non-empty subsets that, in their entirety, comprise all of the blocks. More formally, the subsets, also called cells in this context, are both collectively exhaustive and mutually exclusive with respect to the superset of blocks being partitioned. Each block contained in a subset is tagged with its respective checksum, the checksum thus being effectively embedded into the associated data stream.

In a further intermediate processing step (not depicted), for additional redundancy, the network client duplicates each data stream. In information technology, this process is commonly known as backing up the data stream. As an additional benefit, the duplicate data stream, commonly called the backup, may serve to restore the original data stream after a data loss event. Such event may be entailed by disaster, such as a natural disaster, earthquake, flood, tornado, or fire, in which case the restoration is known as disaster recovery. Data loss may also be caused by accidental deletion or corruption of the data stream as may occur in case of a power failure, resulting in data in volatile memory not being saved to permanent memory; a hardware failure, such as a head crash in a hard disk; a software crash or freeze, resulting in data not being saved; a software bug or poor usability, such as not confirming a file delete command; or a business failure such as vendor bankruptcy of a file hosting service provider.

In addition to protecting against permanent data loss, duplication of the data stream may allow the network client to restore the original in case of data unavailability such as may arise from a temporary network outage. To further improve the chances of restoration during network outages, the computer network is preferably based on the Internet protocol suite (TCP/IP). Robustness being a design principle of the Internet, the underlying architecture of TCP/IP ensures that, in many cases, either the original or the duplicate data stream can be retrieved despite loss of sub-networks, gateways, or routers of a compliant network.

In a further intermediate processing step (not depicted), for improved error detection and correction, the network client interleaves each data stream, that is, it rearranges the data contained therein in a non-contiguous way. This may be especially advantageous if the computer network over which the data streams are to be transmitted is not memoryless, meaning that errors typically occur in bursts rather than independently. In this case, interleaving the data stream allows the network client to create a more uniform distribution of errors across the entire stream. United States Patent No. 7,324,566 provides examples of a method and apparatus that may be used for this purpose.

Finally, in the third processing step 103, the network client transmits the data stream of the second processing step 102 to a storage server over the computer network. In computing, a storage server, sometimes called file server, is a server attached to the computer network that has the primary purpose of providing a location for shared storage that can be accessed by the network client and other workstations. In addition, the storage server may be configured to perform calculations or run programs on behalf of the network client. However, in this embodiment, it is designed primarily to enable the rapid storage and retrieval of data whereas heavy computation is provided by the network client itself.

More specifically, for improved data protection, the network client transmits each data stream generated in the second processing step 102 to a different storage server. For later retrieval, the network client maintains a local database of all storage servers used. This database contains a list of the blocks stored by each storage server, wherein each block is uniquely identified by means of a sequence number assigned by the network client. Since only the network client is in control of the central catalog, the risk of an attacker identifying multiple or all storage servers is effectively reduced and confidentiality can be enforced. In information security, by confidentiality is meant the prevention of disclosure of the data to unauthorized individuals or systems.

Further, to ensure geographic redundancy for each data stream, the network client transmits the respective duplicate data stream to a backup storage server remote from the storage server in charge of the original.

In case that the computer network is the Internet and the storage servers provide the network storage to the network client on demand, like a public utility, the underlying paradigm is known in the art as cloud computing. According to this consumption and delivery model, details of the storage servers are abstracted from the network client who no longer has control over the technology infrastructure "in the cloud" that supports it. The computer data storage thus virtualized can be scaled dynamically to cater for varying capacity demand on the side of the network client.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of storing data by means of a computer network, the method comprising the steps of
segmenting (101) the data into a set of blocks, concatenating (102) at least some of the blocks into a data stream, and
transmitting (103) the data stream to a storage server over the computer network.

2. A method according to claim 1, **characterized in that** the method comprises the steps of
partitioning the set of blocks into a plurality of subsets of blocks,
for each subset, generating a data stream by concatenating (102) the blocks contained in the subset.

3. A method according to claim 2, **characterized in that** the method comprises the further step of
transmitting (103) each data stream over the computer network.

4. A method according to claim 3, **characterized in that** each data stream is transmitted (103) to a different storage server.

5. A method according to any of the preceding claims, **characterized in that** the method comprises the further steps of, prior to transmitting (103) the data stream,
generating a duplicate data stream and
transmitting the duplicate data stream to a backup storage server over the computer network.

6. A method according to any of the preceding claims, **characterized in that** the method comprises the further step of, prior to transmitting (103) the data stream,
computing a checksum from each block by means of a hash function,
wherein each checksum is embedded into the data stream.

7. A method according to claim 6, **characterized in that** the hash function is either of the following:
a cyclic redundancy check,
a longitudinal redundancy check,
a Fletcher's checksum,
an Adler-32 algorithm,
a Luhn algorithm,
a Verhoeff algorithm,
a message-digest algorithm, and
a secure hash algorithm.

8. A method according to any of the preceding claims, **characterized in that** the method comprises the further step of, prior to transmitting (103) the data stream,
interleaving the data stream.

9. A computer program product comprising computer-executable instructions for performing a method when the program is run on a computer, the method comprising the steps of
segmenting (101) data into a set of blocks, concatenating (102) at least some of the blocks into a data stream, and
transmitting (103) the data stream to a storage server over a computer network.

10. A device programmed or configured to perform a method comprising the steps of
segmenting (101) data into a set of blocks,
concatenating (102) at least some of the blocks into a data stream, and
transmitting (103) the data stream to a storage server over a computer network.
